# EUROPEAN PATENT APPLICATION

(11) **EP 4 491 346 A1**
(43) Date of publication of application: **15.01.2025**
(21) Application number: 24188571.4
(22) Date of filing: 15.07.2024
(51) Int. Cl.: B25J 9/00, B25J 9/04, B25J 11/00, B25J 15/00

(54) **PRIMARY ARM AND SECONDARY TOOL COMBINED SYSTEM**

(30) Priority: 14.07.2023 US 202363513579 P
(71) Applicant: MacDonald, Dettwiler and Associates Inc., Brampton, Ontario L6Y 6K7 (CA)
(72) Inventor: John, Lymer, Brampton, Ontario L6Y 6K7 (CA); Kyle, Davidson, Brampton, Ontario L6Y 6K7 (CA); Evghenii, Ilesov, Brampton, Ontario L6Y 6K7 (CA); Raphael, Polonowski, Brampton, Ontario L6Y 6K7 (CA); Andrew, Ogilvie, Brampton, Ontario L6Y 6K7 (CA)
(74) Representative: Grünecker Patent- und Rechtsanwälte PartG mbB

(57) **Abstract**

Provided is a system and method for robotic manipulation. The system includes a primary arm having a two arm linkage, a secondary tool, an attachment for attaching the secondary tool to the primary arm, and a controller of the primary arm for operating the secondary tool. The method includes removing a secondary arm from a storage location, securing the secondary arm to the primary arm, and operating the secondary arm with a controller of the primary arm.

## Description

### Technical Field

The embodiments disclosed herein relate to robotic manipulators and, in particular to systems, methods, and devices for primary arm and secondary tool combined systems.

### Introduction

Conventionally, it may be difficult to access constrained worksites. In particular, where there is an angular interface such as in an enclosed cavity where it may not be possible for an original arm to gain access. Simply adding more tools to conventional systems complicate robotic controls.

There are several challenges in running the robotic controls including those related to computing inverse kinematics for control of multiple arms, data transfer architectures through both arms, changes in configuration to the control algorithms/controllers to facilitate the different control outputs, subsystem power allocations, safe operational procedures and hazard controls of conjoined arms, among some others.

Accordingly, there is a need for an improved system and method for robotic manipulation.

### Summary

Provided is a system for robotic manipulation. The system includes a primary arm having a two arm linkage, a secondary tool, an attachment for attaching the secondary tool to the primary arm, and a controller of the primary arm for operating the secondary tool.

The attachment may be at a wrist of the primary arm.

The secondary tool may be a secondary arm.

The primary arm may be operable to walk end over end from a first grapple fixture to another grapple fixture on a platform.

The primary arm may include a first end effector operable to connect to the primary arm to a first grapple fixture, and a second end effector operable to connect to the primary arm to a second grapple fixture. The primary arm may manipulate the first end effector and the second end effector relative to different positions on a platform.

The primary arm may include a first boom and a second boom, a first joint which connects the first end effector to the first boom, wherein the first joint has three degree of freedom wrist clusters, a second joint which connects the first boom to the second boom, wherein the second joint has three degree of freedom wrist clusters, and a third joint which connects the second boom to the second end effector.

The first boom and the second boom may include first and second orbital replacement unit interfaces. The first and second orbital replacement unit interfaces may provide any one or more of mechanical, power, and data to interfacing objects.

The controller of the primary arm may be operable to compensate for a larger and more complex structure having both the primary arm and the secondary tool.

The secondary arm may have seven degrees of freedom.

The primary arm may have seven degrees of freedom.

The secondary arm may include a grapple fixture for interfacing with a payload. The grapple fixture may transmit any one or more of mechanical, power, and data transfer to the payload.

The primary arm may have a primary axis of manipulation and the secondary arm may have a secondary axis of manipulation. The primary axis may be perpendicular to the secondary axis.

The secondary tool may be any one or more of an orbital replacement unit, a camera, a lighting system, and a payload.

The secondary tool may be any one or more of an end effector, an instrument, a replacement control moment gyroscope, a power converter, a replacement actuator, and an inspection package.

The first joint and the second joint may be removable from the primary arm and passable through an airlock into an interior of a space station for maintenance.

Provided is a method for installation of a secondary arm to a primary arm. The method includes removing the secondary arm from a storage location, securing the secondary arm to the primary arm, and operating the secondary arm with a controller of the primary arm.

The method may further include launching the primary arm and the secondary arm.

The method may further include releasing the secondary arm from a launch package orbital replacement unit interface mechanically and electrically.

The method may further include removing the secondary arm from the primary arm.

The method may further include servicing the secondary arm after removing the secondary arm from the primary arm.

The method may further include orbital replacement unit removal and replacement of a payload using the secondary arm.

Other aspects and features will become apparent, to those ordinarily skilled in the art, upon review of the following description of some exemplary embodiments.

### Brief Description of the Drawings

The drawings included herewith are for illustrating various examples of articles, methods, and apparatuses of the present specification. In the drawings:
Figure 1 is a block diagram of a primary arm and secondary tool combined system, in accordance with an embodiment;
Figure 2 is a block diagram of a system for robotic manipulation, in accordance with an embodiment;
Figure 3 is a flow chart of a method for robotic manipulation, in accordance with an embodiment;
Figures 4A and 4B are diagrams of a crewmember accessing an airlock, in accordance with an embodiment;
Figures 5A and 5B are diagrams of a crewmember moving a payload into an airlock, in accordance with an embodiment; and
Figure 6 is a diagram of a system for robotic manipulation, in accordance with an embodiment.

### Detailed Description

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

A description of an embodiment with several components in communication with each other does not imply that all such components are required. On the contrary, a variety of optional components are described to illustrate the wide variety of possible embodiments of the present invention.

Further, although process steps, method steps, algorithms or the like may be described (in the disclosure and / or in the claims) in a sequential order, such processes, methods and algorithms may be configured to work in alternate orders. In other words, any sequence or order of steps that may be described does not necessarily indicate a requirement that the steps be performed in that order. The steps of processes described herein may be performed in any order that is practical. Further, some steps may be performed simultaneously.

When a single device or article is described herein, it will be readily apparent that more than one device / article (whether or not they cooperate) may be used in place of a single device / article. Similarly, where more than one device or article is described herein (whether or not they cooperate), it will be readily apparent that a single device / article may be used in place of the more than one device or article.

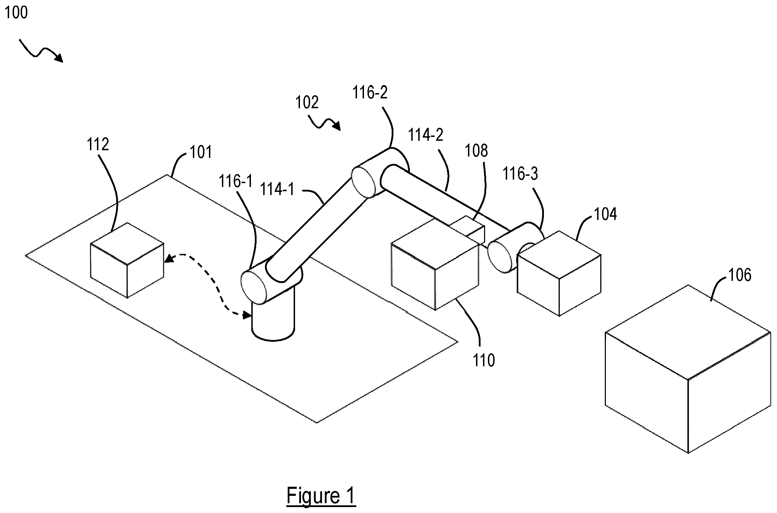

Referring to Figure 1 shown therein is a system 100 for robotic manipulation, according to an embodiment. The system 100 is coupled to a platform 101. In a space-based application, the platform 101 may be a satellite or spacecraft bus, or vehicle platform (e.g., on a rover or the like).

The system 100 includes a primary arm 102. The system 100 includes an end effector 104 operable to connect to the primary arm 102 for moving the end effector 104. The end effector 104 is able to be coupled to a free end of the primary arm 102. The primary arm 102 manipulates, moves, and positions the end effector 104. The end effector 104 may be picked up and removed by the primary arm 102.

The end effector 104 facilitates relative movement for the purposes of docking and/or grappling of the primary arm 102 to an object 106. The object 106 may be mounted on a body, such as a spacecraft. The object 106 may be, for example, a fixture that the primary arm 102 will grapple to. The object 106 may include any one or more of a tool, module, spacecraft, or an orbital replacement unit. The primary arm 102 includes a power system for providing power to the end effector 104. The end effector 104 receives power from the primary arm 102.

The primary arm 102 includes an attachment 108. The attachment 108 may be located at a wrist of the primary arm 102.

The system 100 includes a secondary tool 110 that is removably attachable to the attachment 108 of the primary arm 102.

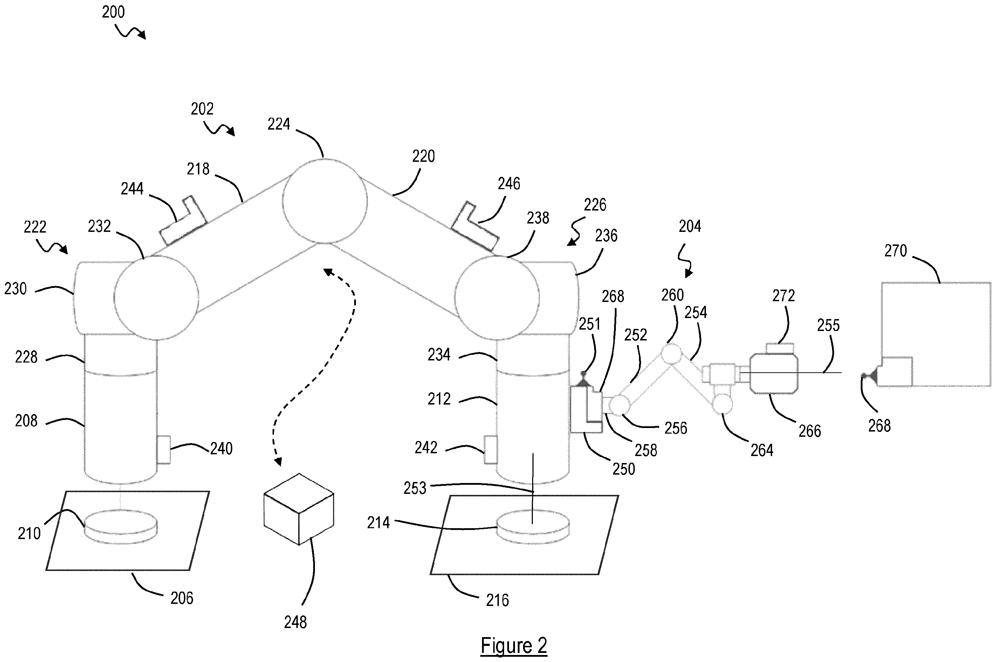

The secondary tool 110 may be a secondary arm (e.g., as described with reference to Figure 2).

The primary arm 102 includes a power system for providing power to the secondary tool 110. The secondary tool 110 receives power from the primary arm 102.

The secondary tool 110 may be any one or more of an orbital replacement unit, a camera, a lighting system, a payload. The secondary tool 110 could itself be an end effector orbital replacement unit. The orbital replacement unit and the payload could have any number of functions. The secondary tool 110 may be an end effector, an instrument, replacement control moment gyroscope, a power converter, a replacement actuator, or an inspection package. The secondary tool 110 may free up the primary arm 102 to do other tasks.

The system 100 includes a controller 112 executing control software for controlling movement of the primary arm 102. The controller 112 may control the operations and movement of both the primary arm 102 and the secondary tool 110.

The primary arm 102 includes a first boom 114-1 and a second boom 114-2. The primary arm 102 includes a first joint 116-1 which connects to the platform 101 and the first boom 114-1. The primary arm 102 includes a second joint 116-2 which connects to the first boom 114-1 and the second boom 114-2. The primary arm 102 includes a third joint 116-3 which connects to second boom 114-2 and end effector 104.

The controller 112 controls movement (e.g., rotation) of the joints 116-1, 116-2, and 116-3, thereby enabling controlled movement of the primary arm 102 and ultimately of the alignment device 104 and the secondary tool 110. The primary arm 102 and controller 112 are communicatively connected and the connection is represented as a hashed line between the primary arm 102 and controller 112. The secondary tool 110 receives instructions from the controller 112. The end effector 104 receives instructions from the controller 112. The primary arm 102 may be manipulated and managed manually (e.g., by an operator).

The controller 112 controls the secondary tool 110 a single operational system of the primary arm 102, thereby eliminating the need to have a separate control system for the secondary tool 110. The primary arm 110 is able to support power and data of the secondary tool 110. The controller 112 of the primary arm 102 is operable to make modifications to function effectively since the control system 112 compensates for a larger and more complex structure having both the primary arm 102 and the secondary tool 110.

Referring now to Figure 2, illustrated therein is a system 200 for robotic manipulation, in accordance with an embodiment. The system 200 includes a primary arm 202 and a secondary arm 204 attached to the primary arm 202.

The system 200 may be a dexterous robotic system for operations in outer space. The system 200 includes the primary arm 202 that may be relocatable. The system 200 allows the secondary arm 204 to be removed for maintenance.

The primary arm 202 is coupled to a first point 206 on a platform. In a space-based application, the platform may be a satellite or spacecraft bus, or vehicle platform (e.g., on a rover or the like). The primary arm 202 typically has seven degrees of freedom. The primary arm 202 may have other numbers of degrees of freedom.

The primary arm 202 includes a first end effector 208 operable to connect to the primary arm 202 to a first grapple fixture 210. The first grapple fixture 210 is able to be attached to the platform at the first point 206. The primary arm 202 includes a second end effector 212 operable to connect to the primary arm 202 to a second grapple fixture 214. The second grapple fixture 210 is able to be attached to the platform at a second point 216. The primary arm 202 manipulates, moves, and positions the first end effector 208 and the second end effector 212 relative to different positions on the platform.

The primary arm 202 may be operable to walk end over end from the first grapple fixture 210 (or second grapple fixture 214) to another grapple fixture on the platform. The connection of a tool or the secondary arm 204 at the wrist may permit the primary arm 202 to walk end over end.

The first end effector 208 and the second end effector 212 may be structurally the same. The first end effector 208 and the second end effector 212 may be low profile end effectors (e.g., as described in Canadian patent number 3,106,753 granted August 17, 2021, which is incorporated by reference in its entirety).

The first grapple fixture 210 and the second grapple fixture 214 may be structurally the same. The first grapple fixture 210 and the second grapple fixture 214 may be passive elements to be grasped. The first grapple fixture 210 and the second grapple fixture 214 may be low profile grapple fixtures (e.g., as described in Canadian patent number 3,106,753).

The primary arm 202 includes a first boom 218 and a second boom 220. The primary arm 202 includes a first joint 222 which connects the first end effector 208 to the first boom 218. The primary arm 202 includes a second joint 224 which connects to the first boom 218 and the second boom 220. The primary arm 202 includes a third joint 226 which connects the second boom 220 to the second end effector 212.

The first joint 222 has three degree of freedom wrist clusters. The first joint 222 includes a first wrist roll joint 228 for rotating the first end effector 208 about a first roll axis relative to the first boom 218. The first joint 222 includes a first wrist yaw joint 230 for rotating the first end effector 208 about a first yaw axis relative to the first boom 218. The first joint 222 includes a first wrist pitch joint 232 for rotating the first end effector 208 about a first pitch axis relative to the first boom 218.

The second joint 224 includes an elbow pitch joint that rotates the first boom 218 with respect to the second boom 220.

The second joint 226 has three degree of freedom wrist clusters. The second joint 226 includes a second wrist roll joint 234 for rotating the second end effector 212 about a second roll axis relative to the second boom 220. The second joint 226 includes a second wrist yaw joint 236 for rotating the second end effector 212 about a second yaw axis relative to the second boom 220. The second joint 226 includes a second wrist pitch joint 238 for rotating the second end effector 212 about a second pitch axis relative to the second boom 220.

The first joint 222 and the second joint 226 may be separable (e.g., by operational crew on-orbit). The first joint 222 and the second joint 226 may be removed from the rest of the primary arm 202. Where the system 200 is deployed in space, the first joint 222 and the second joint 226 may be passed through an airlock into an interior of a space station for maintenance.

The first end effector 208 and the second end effector 212 include first and second camera and lighting system 240, 242, respectively. The first and second camera and lighting systems 240, 242 are equipped with cameras and lights to support machine vision and worksite viewing functions.

The primary arm 202 may performs tasks with large reach (e.g., on the order of 17 metres) and larger tip force capability.

The primary arm 202 may perform a free-flyer capture of a vehicle (e.g., object 106). The primary arm 202 may autonomously perform a free-flyer capture of the vehicle (e.g., object 106) under the guidance of advanced control algorithms. After capturing the vehicle, the primary arm 202 berths the vehicle to a berthing interface on a space station (e.g., platform).

The system 200 includes an arm control unit 248 (or controller) executing control software for controlling of the primary arm 202. The arm control unit 248 may control the operations and movement of both the primary arm 202 and the secondary arm 204. The arm control unit 248 may switch between control of the primary arm 202 and the secondary arm 204. The arm control unit 248 of the primary arm 202 is operable to make modifications to function effectively by compensating for a larger and more complex structure having both the primary arm 202 and the secondary arm 204.

The arm control unit 248 controls movement (e.g., rotation) of the joints 222, 224, 226 thereby enabling controlled movement of the primary arm 202 and ultimately of the end effectors 208, 212 and the secondary arm 204. The primary arm 202 and arm control unit 248 are communicatively connected and the connection is represented as a hashed line between the primary arm 202 and arm control unit 248. The secondary arm 202 receives instructions from the arm control unit 248. The primary arm 202 may be manipulated and managed manually (e.g., by an operator).

The arm control unit 248 may be located on the primary arm 202. The arm control unit 248 may include avionics that are capable of controlling either the primary arm 202 or the secondary arm 204, and one at a time. The system 200 may include two strings, with one arm control unit per string. The secondary arm 204 is controlled by the arm control unit 248 of the primary arm 202, which reduces the avionics needed for the secondary arm 204.

The system 200 includes an attachment 250 for removably attaching the secondary arm 204 to the primary arm 202. The attachment 250 may be an orbital replacement unit interface. The attachment 250 may provide any one or more of mechanical, power, and data transmission to the secondary arm 204. The system 200 may include a dexterous grapple fixture 251 mounted on dexterous grapple fixture 268, which, in some embodiments can facilitate the attachment/removal of the secondary arm 204. Other secondary tools may attach to the attachment 250 other than the secondary arm 204, when the secondary arm 204 is not attached to the primary arm 202.

The attachment 250 may be at the wrist of the primary arm 202. The attachment 250 may be located anywhere along the length of the primary arm 202. The attachment 250 may be located on a rail system on the primary arm 202.

The primary arm 202 has a primary axis 253 of manipulation. The secondary arm 204 has a secondary axis 255 of manipulation. The primary axis 253 may be perpendicular to the secondary axis 255. The base of the secondary arm 204 may be defined by a reference frame on, for example, attachment 250. The position of the secondary arm 204 may depend on which attachment point is chosen/designed.

The secondary arm 204 may have seven (7) degrees of freedom. The secondary arm 204 includes a first boom 252 and a second boom 254. The secondary arm 204 includes a first joint 256 which connects a first end effector 258 to the first boom 252. The secondary arm 204 includes a second joint 260 which connects to the first boom 252 and the second boom 254. The secondary arm 204 includes a third joint 264 which connects the second boom 254 to a dexterous end effector 266.

The secondary arm 204 is installed on the primary arm 202 via the attachment interface 250.The first end effector 258 of the secondary arm 204 connects to a corresponding interface 268 of the attachment 250.

The dexterous end effector 266 of the secondary arm 204 connects to a dexterous grapple fixture 268 on a payload 270. The dexterous end effector 266 transmits any one or more of mechanical, power, and data transfer to the payload 270. The dexterous end effector 266 may include a camera and lights system 272.

The secondary arm 204 may be installed by operational crew on-orbit. The secondary arm 204 may remains on a side of the primary arm 202 after installation.

If maintenance is desired, the secondary arm 204 configures into a compact configuration. Operational crew may then remove the secondary arm 204 from the primary arm 202. The secondary arm 204 is passed through an airlock into the interior of the space station for maintenance.

The secondary arm 204 may be equipped with a force/moment sensor and advanced control algorithms that allow the secondary arm 204 to perform dexterous tasks that have contact with the environment (e.g., orbital replacement unit payload remove and replace operations).

The secondary arm 204 also extends the reach of the primary arm 202, allowing the system 200 to unpack visiting vehicles to the space station. The secondary arm 204 may access the orbital replacement unit stowage interfaces 244, 246 on the primary arm 202. This allows the primary arm 202 to walk end-over-end on the space station, taking the secondary arm 204 and a replacement payload to a site of a payload 276 in need of replacement.

The secondary arm 204 may remove the payload 270 and stow the payload 270 on the orbital replacement unit interface 244 on the primary arm boom 218. The secondary arm 204 can then retrieve a replacement payload 270 from the orbital replacement unit interface 246 on the second primary arm boom 220, and install the payload 270 on the space station in place of the payload 270 that had just been removed. The system 200 then takes the payload 270 that has been removed, and places the payload 270 in an airlock, or pack it onto the visiting vehicle.

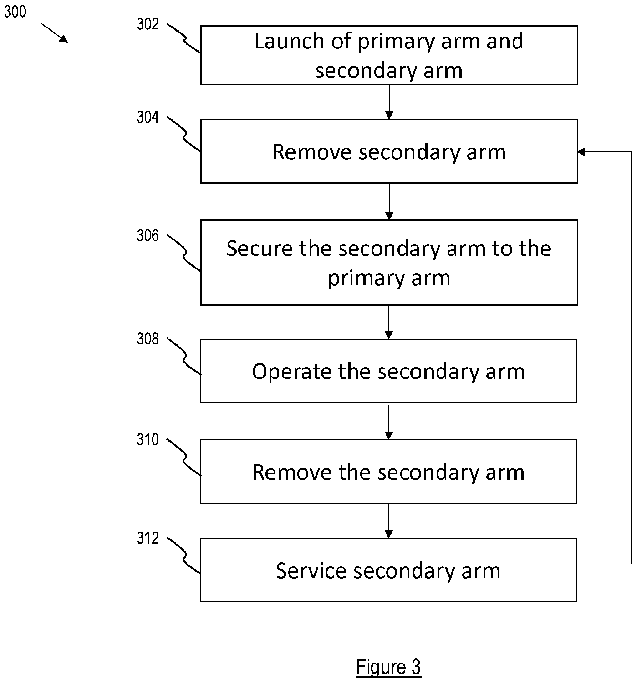

Referring now to Figure 3 illustrated therein is a method 300 for installation and removal of a secondary arm, in accordance with an embodiment.

At 302, a primary arm (e.g., primary arm 202) and secondary arm (e.g., secondary arm 204) are launched together. The launch package may allow for the secondary arm to be launched already attached to the primary arm via an orbital replacement unit interface. The secondary arm may be physically separated from the primary arm in the launch package. The secondary arm may be launched separately on a later flight. If the secondary arm is not already attached to the primary arm for launch, launch tie-downs are released by ground or station operator command after arrival on-orbit. This leaves the secondary arm secured to the launch package via an orbital replacement unit interface at its base, through which it receives keep-alive power. The secondary arm is now ready to be removed from the launch package by operational crew.

At 304, the operational crew attach a handling tool to a handling fixture the base of the secondary arm, and attach a tether to the secondary arm's base. Operational crew then release the secondary arm from the launch package orbital replacement unit interface mechanically and electrically (e.g., by driving a single tie-down bolt with a pistol grip tool). Operational crew then use a handling tool to extract the secondary arm out of the orbital replacement unit interface. The secondary arm can now be moved by operational crew via the handling tool.

At 306, the primary arm moves to a configuration that presents the orbital replacement unit attachment interface for the secondary arm to operational crew. Using the handling tool, operational crew guide the base of the secondary arm into the orbital replacement unit interface until the secondary arm is soft-docked. Operational crew then use the pistol grip tool to drive the single tie-down bolt. The secondary arm is secured to the primary arm electrically and mechanically. Operational crew release the tether and remove the handling tool.

At 308, the secondary arm is now installed and ready for operation.

At 310, to remove the secondary arm from the primary arm for maintenance, the secondary arm is first commanded into a compact airlock transit configuration. The secondary arm has two strings, so this operation may be performed on the healthier of the two strings. The operational crew attach a handling tool to a handling fixture the base of the secondary arm and attach a tether to the secondary arm's base. Operational crew then release the secondary arm from the primary arm's orbital replacement unit interface mechanically and electrically (e.g., by driving a single tie-down bolt with the pistol grip tool). Operational crew then use the handling tool to extract the secondary arm out of the orbital replacement unit interface. The secondary arm can now be moved by operational crew via the handling tool to a space station airlock, where the secondary arm is installed into an orbital replacement unit interface for transit into the internal pressurized environment, where the secondary arm can be serviced, at 312.

Once the secondary arm has been serviced, it is returned to the vacuum environment via the airlock, where operational crew remove the secondary arm from the orbital replacement unit interface following, and then install the secondary arm back onto the primary arm following the steps described previously as described with reference to 304 to 308.

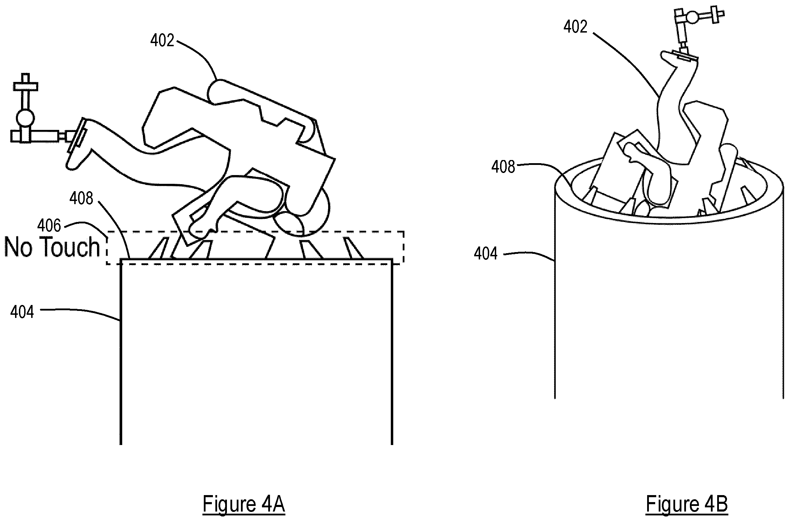

As shown at Figure 4A, operational access by a crew member 402 to the interior of a bell-jar style airlock 404 (e.g., Bishop airlock) may be limited depending on the diameter of the airlock 404. The airlock 404 may have no touch zones 406 at the opening 408 where interfacing features reside. The airlock diameter may result in a volume that is too small for operational crew 402 to enter, as shown at Figure 4B.

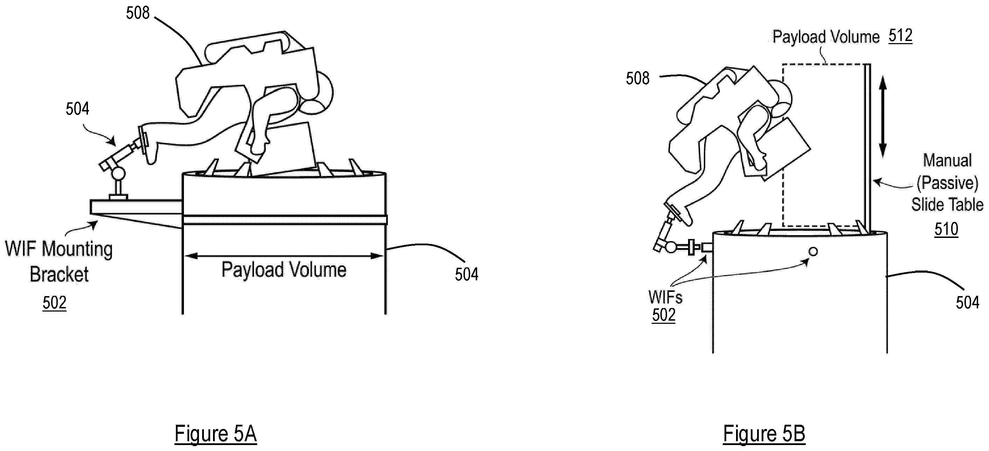

As shown in Figure 5A, worksite interface sockets 502 could be added to the exterior of the airlock 504, for installation of an astronaut portable foot restraint 506 for operational access by the crew member 508, as illustrated by Figure 3. Additional operational handholds may be needed to assist with operational ingress into the astronaut portable foot restraint 506

As shown at Figure 5B, a slide table feature 510 may be added to the airlock 504, to bring equipment 512 within reach of crew member 208 for stowage. The slide table feature 510 could be motorized and driven from the space station. The slide table feature 510 may be a passive mechanism that provides an external drive bolt that the crew member actuates using a pistol grip tool.

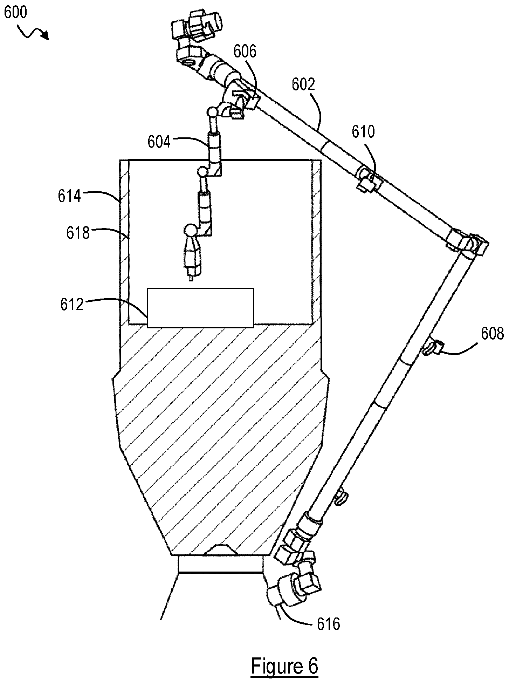

Referring now to Figure 6, illustrated therein is a system 600 for robotic manipulation, in accordance with an embodiment.

The system 600 includes a primary arm 602 (e.g., primary arm 202) and a secondary arm 604 (e.g., secondary arm 604). The primary arm 602 hosts the secondary arm 604. The primary arm 602 attaches to the secondary arm 604 by an orbital replacement unit interface 606. The primary arm 602 provides stowage locations 608, 61 0for at least two payloads. In some embodiments, the secondary arm 604 is less than half the size of the primary arm 602. The secondary arm 604 may be the same size as the primary arm 602.

The secondary arm 604 is installed and removed to and from the primary arm 602 via the orbital replacement unit interface 606 by extravehicular activity.

The secondary arm 604 is hosted on the primary arm 602 for operations. The secondary arm 604 is ccontrolled by avionics of the primary arm 602. The secondary arm 604 can access the payload stowage locations 608, 610, on booms of the primary arm 602.

The combined primary arm and secondary arm system 600 performs a method for orbital replacement unit removal and replacement of a payload 612. Replacement orbital replacement units arrive on a visiting vehicle 614, or transit to the exterior of a space station via an airlock. To retrieve a replacement orbital replacement unit (payload 612) from the visiting vehicle 614, the primary arm 602 walks end over end (if necessary) via low profile grapple fixture operating points, until arriving at a low profile grapple fixture 616 that is situated for access to stowed payloads 612 on the visiting vehicle 614. The primary arm 602 positions itself so that the secondary arm 604 can access stowed payloads 612 on the visiting vehicle 614. The secondary arm 604 retrieves a new orbital replacement unit (payload 612) from a stowage location 618 on the visiting vehicle 614, for example, by grasping a dexterous grapple fixture (for example as described in PCT/CA2022/051842, published as WO2023/108293 June 22, 2023, which is hereby incorporated by reference in its entirety) with a dexterous end effector (for example as described in PCT/CA2022/051842). Using the torquer in the dexterous end effector to release the orbital replacement unit tie-down. The secondary arm 604 then stows the replacement orbital replacement unit (payload 612) in a stowage location (e.g., 608, 610) on the primary arm 602.

Next, the primary arm 602 walks end over end to the low profile grapple fixture that is well-situated for access to the orbital replacement unit 612 that is to be removed and replaced, and positions the secondary arm 604 for access to the worksite. The secondary arm 604 removes the orbital replacement unit 612. The primary arm 602 then reconfigures as needed to bring its stowage location (608, 610) to within reach of the secondary arm 604. The secondary arm 604 stows the failed orbital replacement unit 612 on the primary arm 602. The primary arm 602 reconfigures itself so that the secondary arm 604 can retrieve the replacement orbital replacement unit 612 from its stowage location (e.g., 608, 610) on the primary arm 602. The secondary arm 604 retrieves the replacement orbital replacement unit 612. The primary arm 602 then moves the secondary arm 608 for access to the worksite. The secondary arm 608 installs the replacement orbital replacement unit 612 to the worksite and ties down the orbital replacement unit 612.

The system 600 then moves back to the low profile grapple fixture that provides access to the visiting vehicle 616. The secondary arm 604 stows the failed orbital replacement unit 612 on the visiting vehicle 614 for return to Earth.

If the replacement orbital replacement unit 612 is made available via the airlock, the same operational steps above are performed, except that the primary arm 602 moves to the airlock worksite at the start and end, rather than to the visiting vehicle worksite.

This system and operations concept build on approaches used for operation of primary arm 602 and secondary arm 604 combinations used for on-orbit servicing. The systems, methods and devices may include any one or more of elements described herein including using a common computer and control software capable of controlling the primary arm and switch to control the secondary arm 604, which saves avionics costs, i.e. co-hosting of arm control for two systems on one computer unit.

The systems, methods and devices may include any one or more of elements described herein including access to payload stowage sites 608, 610 on the primary arm 602 without additional appendages or stowage devices, thereby accommodating the stowage of payloads and providing those payloads keep-alive power. Since the payloads are on the primary arm 602, the system 600 takes the payloads with the system 600 as the primary arm 602 goes.

The systems, methods and devices may include any one or more of elements described herein including processes to get the secondary arm 604 into and/or out of the airlock by operational crew where the airlock is a Bishop-style airlock.

While the above description provides examples of one or more apparatus, methods, or systems, it will be appreciated that other apparatus, methods, or systems may be within the scope of the claims as interpreted by one of skill in the art.

## Claims

1. A system for robotic manipulation, the system comprising:
a primary arm having a two arm linkage;
a secondary tool;
an attachment for attaching the secondary tool to the primary arm; and
a controller of the primary arm for operating the secondary tool.

2. The system of claim 1, wherein the attachment is at a wrist of the primary arm.

3. The system of claim 1 or 2, wherein the secondary tool is a secondary arm.

4. The system of one of claims 1 to 3, wherein the primary arm is operable to walk end over end from a first grapple fixture to another grapple fixture on a platform, and/or
wherein the primary arm includes:
a first end effector operable to connect to the primary arm to a first grapple fixture; and
a second end effector operable to connect to the primary arm to a second grapple fixture, wherein the primary arm manipulates the first end effector and the second end effector relative to different positions on a platform.

5. The system of claim 4, wherein the primary arm includes:
a first boom and a second boom;
a first joint which connects the first end effector to the first boom, wherein the first joint has three degree of freedom wrist clusters;
a second joint which connects the first boom to the second boom, wherein the second joint has three degree of freedom wrist clusters; and
a third joint which connects the second boom to the second end effector.

6. The system of claim 5, wherein the first boom and the second boom include first and second orbital replacement unit interfaces, wherein the first and second orbital replacement unit interfaces provide any one or more of mechanical, power, and data to interfacing objects and/or
wherein the controller of the primary arm is operable to compensate for a larger and more complex structure having both the primary arm and the secondary tool.

7. The system of claim 2, wherein the secondary arm has seven degrees of freedom, and wherein the primary arm has seven degrees of freedom.

8. The system of claim 3, wherein the primary arm has a primary axis of manipulation and the secondary arm has a secondary axis of manipulation, and wherein the primary axis is perpendicular to the secondary axis.

9. The system of one of claims 1 to 8, wherein the secondary tool is any one or more of an orbital replacement unit, a camera, a lighting system, and a payload and/or
wherein the secondary tool is any one or more of an end effector, an instrument, a replacement control moment gyroscope, a power converter, a replacement actuator, and an inspection package.

10. The system of one of claims 1 to 9, wherein the first joint and the second joint are removable from the primary arm and passable through an airlock into an interior of a space station for maintenance.

11. A method for installation of a secondary arm to a primary arm, the method comprising:
removing the secondary arm from a storage location;
securing the secondary arm to the primary arm; and
operating the secondary arm with a controller of the primary arm.

12. The method of claim 11, further comprising releasing the secondary arm from a launch package orbital replacement unit interface mechanically and electrically.

13. The method of claim 11 or 12, further comprising removing the secondary arm from the primary arm.

14. The method of claim 13 further comprising servicing the secondary arm after removing the secondary arm from the primary arm.

15. The method of one of claims 11 to 14 further comprising orbital replacement unit removal and replacement of a payload using the secondary arm.
